Europäisches Patentamt

**European Patent Office**

**Office européen des brevets**

(19)

(11) Veröffentlichungsnummer: **0 007 017**
**B1**

(12) **EUROPÄISCHE PATENTSCHRIFT**

(45) Veröffentlichungstag der Patentschrift: **20.05.81**

(51) Int. Cl.³: **B 60 S 1/40**

(21) Anmeldenummer: **79102017.5**

(22) Anmeldetag: **19.06.79**

(54) Vorrichtung zum Wischen von Kraftfahrzeugscheiben.

(30) Priorität: **13.07.78 DE 2830773**

(43) Veröffentlichungstag der Anmeldung:
**23.01.80 Patentblatt 80/2**

(45) Bekanntmachung des Hinweises auf die Patenterteilung:
**20.05.81 Patentblatt 81/20**

(84) Benannte Vertragsstaaten:
**BE DE FR GB IT**

(56) Entgegenhaltungen:
**DE - B - 1 505 439**
**US - A - 3 386 123**
**US - A - 3 702 490**

(73) Patentinhaber: **ROBERT BOSCH GMBH**
**Postfach 50**
**D-7000 Stuttgart 1 (DE)**

(72) Erfinder: **Mayer, Jürgen**
**August-Euler-Weg 3**
**D-7560 Gaggenau (DE)**
Erfinder: **Biebl, Herbert, Ing.-grad.**
**Sukkelpotweg 17**
**B-3201 Holsbeek (BE)**

Courier Press, Leamington Spa, England.

Vorrichtung zum Wischen von Kraftfahrzeugscheiben

Die Erfindung geht aus von einer Wischvorrichtung nach der Gattung des Hauptanspruchs. Es ist schon eine Wischvorrichtung bekannt (US—A 3 386 123), bei der zum Anbringen des Wischgummis am Wischblattgestell die beiden Schenkel eines U-förmigen Federelements zusammengedrückt werden müssen, damit das Federelement zusammen mit dem Wischgummi in die Halekrallen des Wischblattgestells eingebracht werden kann. Beim Zusammendrücken der Federschenkel kann ein beim Herstellen des Federelements entstandener Schneidgrat zu Verletzungen führen, weil die schmalen nach außen gerichteten Schenkelkanten zu einer hohen spezifischen Flächenpressung führen.

Die erfindungsgemäße Wischvorrichtung mit den kennzeichnenden Merkmalen des Hauptanspruchs hat demgegenüber den Vorteil, daß durch die Griffflächen die spezifische Flächenpressung, welche beim Zusammendrücken der Federschenkel auftritt, so stark gesenkt wird, daß die Gefahr einer Verletzung entscheidend gemindert ist.

Ausführungsbeispiele der Erfindung sind in der Zeichnung dargestellt und in der nachfolgenden Beschreibung näher erläutert.

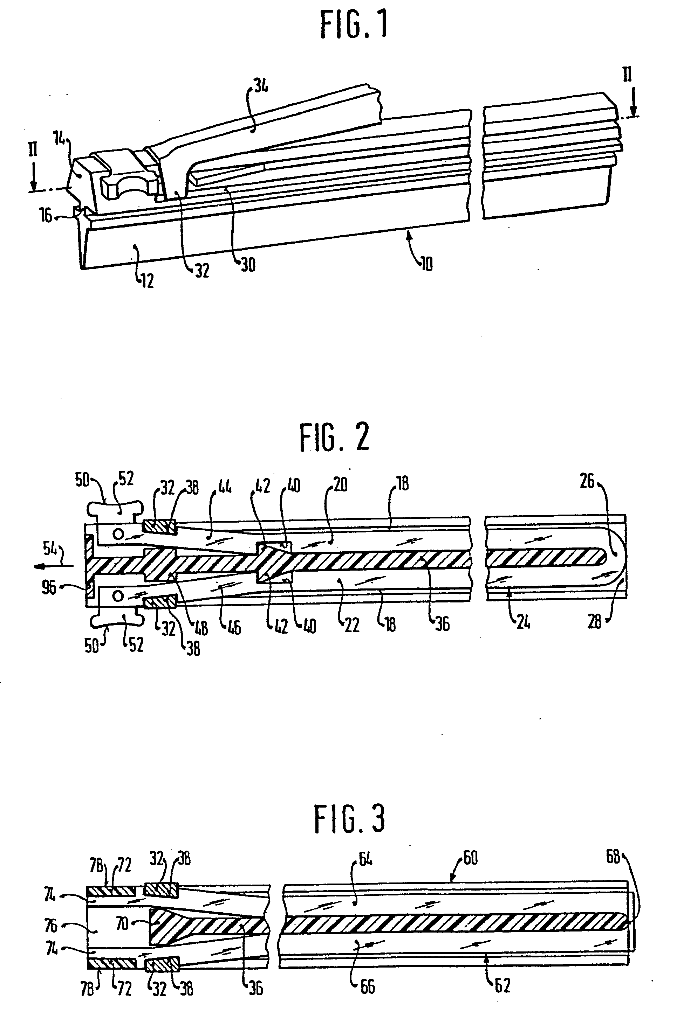

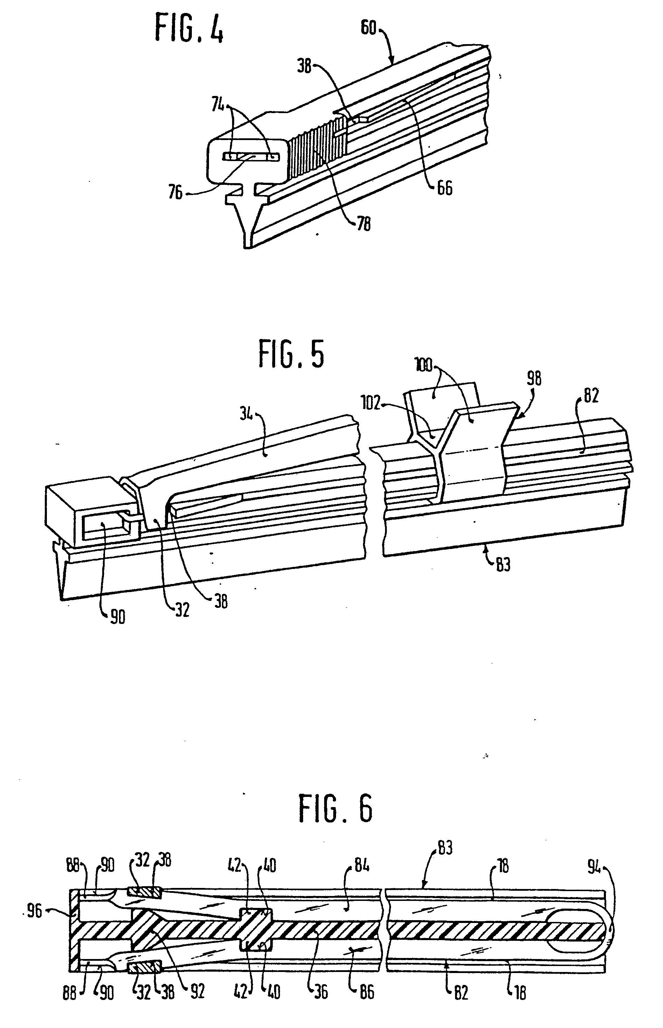

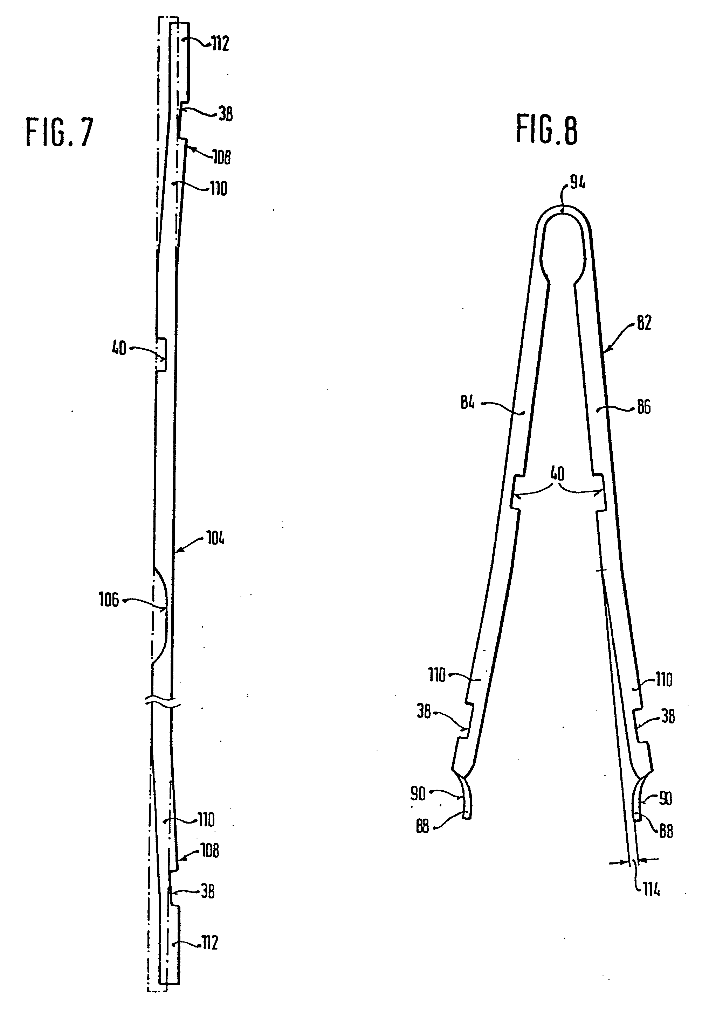

Es zeigen Figur 1 eine Wischgummileiste und ein Teil des Wischblattgestells in isometrischer Darstellung, Figur 2 einen Schnit durch die Wischgummileiste entlang der Linie II—II in Figur 1, Figur 3 einen Schnitt gemäß Figur 2 durch eine andere Ausführung der Wischgummileiste, Figur 4 eine isometrische Darstellung eines Endes der Wischgummileiste gemäß Figur 3, Figur 5 eine isometrische Darstellung einer weiteren Ausführung der von einem Gestellteil gefaßten Wischgummileiste, Figur 6 einen Schnitt gemäß den Figuren 2 und 3 durch eine weitere Ausführung der Wischgummileiste, Figur 7 eine Draufsicht auf eine zur Wischgummileiste gemäß den Figuren 5 und 6 gehörendes, als Federbandstreifen vorgefertigtes, noch nicht gebogenes Federelement und Figur 8 das aus dem Federbandstreifen gemäß Figur 7 gebogene Federelement in Ansicht.

Ein in Figur 1 dargestellter Wischgummistreifen 10 weist eine Wischlippe 12 und ein Rückenteil 14 auf. Die Wischlippe 12 ist mit dem Rückenteil 14 über einen Kippsteg 16 verbunden. In den Längsseiten des Rückenteils sind zwei einander gegenüberliegende Längsnuten 18 angeordnet, die zur Aufnahme von Federschienen 20, 22 dienen, welche durch die Schenkel eines haarnadel- oder U-förmigen Federelements 24 gebildet sind. An dem dem Scheitelbereich 26 des Federelements zugeordneten Ende des Rückenteils 14 sind die beiden Längsnuten 18 durch eine Quernut 28 miteinander verbunden, in welcher der Scheitelbereich 26 des Federelements 24 liegt (Figuren

1 und 2). Unterhalb der Längsnuten 18 sind in dem Rückenteil 14 Längsrillen 30 vorhanden, in welche krallenförmige Fortsätze 32 von Gestellteilen 34 greifen, welche zusammen mit dem Wischgummistreifen 10 ein Wischblatt bilden. Wie insbesondere aus Figur 1 ersichtlich ist, übergreifen die Krallen 32 des Gestellteils 34 die in den Längsnuten 18 liegenden Federschenkel 20 und 22 des Federelements 24. Wie aus Figur 2 ersichtlich, befindet sich zwischen den beiden Federschenkeln 20 und 22 des Federelements 24 eine Wand 36 des Rückenteils 14. Die Schenkelenden sind im Bereich der Haltekrallen 32 des Gestellteils 34 mit einer nach außen randoffenen Aussparung 38 versehen. Die Aussparungen 38 sind den Haltekrallen 32 des Gestellteils 34 zugeordnet und bilden eine Verschiebesicherung zwischen dem Federelement 24 und dem Geteil des Wischblatts, das mehrere Gestellteile 34 aufweisen kann. Weiter weisen die Federschenkel 20 und 22 des Federelements 24 an den einander zugewandten Seiten jeweils eine randoffene Ausnehmung 40 auf, denen jeweils eine partielle Verdickung 42 der Wand 36 zugeordnet ist. Die Ausnehmungen 40 bilden zusammen mit den Verdickungen 42 eine Verschiebesicherung zwischen dem Federelement 24 und dem Wischgummistreifen 10. Wie aus Figur 2 weiter ersichtlich ist, divergieren die Endabschnitte 44 und 46 der Federschenkel 20 und 22 von den Ausnehmungen 40 aus. Dabei sind die Federschenkel 20 und 22, mit Ausnahme der Aussparungen 38 und der Ausnehmungen 40 über ihre gesamte Länge gleich breit, so daß die Breite des Federelements zu dem Scheitelbereich 26 gegenüber liegenden Ende hin zunimmt. Dies hat zur Folge, daß die einander zugewandten Innenkanten der Federschenkel 20 und 22 nicht mehr an der Wand 36 anliegen. Um eine Bewegung des Federelements 24 gegenüber dem Wischgummistreifen 10 zu verhindern, ist die Wand 36 im Bereich der Aussparungen 38 der Federschenkel 20 und 22 derart verdickt, daß sich Puffer 48 ergeben, welche im Bereich der Haltekrallen 32 an den Innenkanten der Federschenkel 20, 22 anliegen. Die Dimensionierung der Puffer 48 ist so getroffen, daß in der in Figur 2 dargestellten Einbaulage des Federelements 24 die Puffer 48 schon etwas deformiert sind, so daß die freien Enden 44 und 46 der Federschenkel 20 und 22 an den Haltekrallen 32 des Gestellteils 34 fest angelegt sind. Die Puffer 48 sind an die Wand 36 des Rückenteils 14 angeformt und wirken mit den Innenkanten der Federschenkel 20 und 22 zusammen. Um die freien Enden der Federschenkel 20 und 22 zusammendrücken zu können, sind diese mit Griffflächen 50 versehen, welche an mit den Federschenkelenden verbundenen Handhaben 52 angeordnet sind. Das Zusammendrücken der mit Abstand voneinander liegenden Enden 44 und 46 der Federschenkel 20 und 22 ist dann nötig, wenn die Verbindung zwischen dem Gestellteil 34 und dem Wischgummistreifen 10 gelöst werden soll. Dann nämlich werden die freien Enden 44 und 46 unter Überwindung der Elastizität der Puffer 48 soweit zusammengepreßt, bis die Haltekrallen 32 des Gestellteils 34 aus den Aussparungen 38 der Federschenkel 20 und 22 gelangen. Danach kann der Wischgummistreifen 10 zusammen mit dem Federelement 24 in Richtung des Pfeiles 54 aus dem Gestellteil 34 gezogen werden.

Der Wischgummistreifen 60 gemäß Figur 3 sowie das zu diesem gehörende Federelement 62 entsprechen im wesentlichen den entsprechenden, oben beschriebenen Bauteilen. Abweichend davon hat der Wischgummistreifen 60 aber keine Quernut für den Scheitelbereich des Federelements 62, weil dieser aus der Ebene gebogen ist, in der sich die beiden Schenkel 64 und 66 des haarnadelförmigen Federelements 62 befinden. Der so abgewinkelte Scheitelbereich des Federelements bildet also einen Anschlag 68, der eine Montagehilfe bildet, wenn das Federelement in den Wischgummistreifen 10 eingesetzt wird. Dafür sind bei der Ausführung gemäß Figur 3 die partiellen Verdickungen 42 der Wand 36 und die randoffenen Ausnehmungen 40 in den Federschenkeln 64 und 66 nicht unbedingt erforderlich. Dagegen ist die Wand 36 des Wischgummistreifens 60 aber ebenfalls mit einem Puffer 70 versehen, der in Anordnung und Zweck den Puffern 48 bei der Ausführungsform gemäß Figur 2 entspricht. Die äußersten Endabschnitte der Federschenkel 64 und 66 sind an ihrer Außenseite mit Ausklinkungen 72 ausgestattet, so daß diese Abschnitte schmaler sind als die überwiegenden Bereiche der Schenkel 64 und 66. Die so gebildeten schmalen Enden 74 der Federschenkel 64 und 66 stecken in einer tunnel- oder taschenartigen Ausbildung 76 des Rückenteils des Wischgummistreifens 60. Die einander gegenüberliegenden Seitenwände 78 der tunnelartigen Ausbildung 76 sind geriffelt (Figur 4) und bilden die Griffflächen zum Zusammenpressen der Federschenkel 64 und 66 des Federelements 62.

Die in den Figuren 5 und 6 dargestellte Ausführung des mit einem Federelement 82 versehenen Wischgummistreifens 83 entspricht im wesentlichen der Ausführung gemäß den Figuren 1 und 2. So ist das Federelement 82 ebenfalls haarnadelförmig ausgebildet und die Federschenkel 84 und 86 sind an ihren einander zugewandten Kanten mit Ausnehmungen 40 versehen, denen partielle Verdickungen 42 der Wand 36 zugeordnet sind. Weiter weisen die Federschenkel 84 und 86 nahe ihren freien Enden nach außen randoffene Aussparungen 38 für die Haltekrallen 32 des Gestellteils 34 auf. Jedoch sind die äußersten Endabschnitte 88 der Federschenkel 84 und 86 um etwa 90° verschränkt, so daß sich Griffflächen 90 ergeben, mit deren Hilfe sich die Federschenkel 84 und 86 zum oben beschriebenen Zweck zusammendrücken lassen. Weiter ist die Wand 36 auch mit Pufferstücken 92 ausgestattet, welche die Federschenkel 84 und 86 in dem in Figur 6 gezeichneten Betriebszustand vorgespannt an den Haltekrallen 32 des Gestellteils 34 angelegt halten. Abweichend von der Ausführung gemäß Figur 1 ist der Querschnitt des Federelements 82 im Bereich des Scheitels 94 geringer gehalten als im Bereich der Federschenkel 84 und 86, so daß eine einfache Fertigung des Federelements 82 möglich ist. Übereinstimmend mit der Ausführung gemäß den Figuren 1 und 2 sind die Enden der Federschenkel 84 und 86 durch eine Querwand 96 abgedeckt.

Wie Figur 5 zeigt ist der mit dem Federelement 82 versehene Wischgummistreifen 83 mit einem Halteelement 98 versehen, welches ähnlich wie die Haltekrallen 32 des Gestellteils 34 die Federschenkel 84 und 86 des Federelements 82 übergreifen und diese gegen Austreten aus den ihnen zugeordneten Längsnuten 18 sichert. Dies ist insbesondere dann erforderlich, wenn der Wischgummistreifen 84 mit dem Federelement 82 vormontiert in ein Gestell des Wischblatts eingebracht werden soll. Der Wischgummistreifen 84 bildet zusammen mit dem Federelement 82 ein Nachrüstset, welches an Stelle eines unbrauchbaren Wischgummis und dessen Federschienen in das Wischblattgestell eingesetzt wird. Das Halteelement 98 kann dann entfernt werden, wenn die Schenkel 84 und 86 des Federelements 82 von Paaren von Haltekrallen 32 gefaßt ist. Dies geschieht auf einfache Weise beim dargestellten Halteelement dadurch, daß die beiden Grifflappen 100 zusammengedrückt werden, wodurch das Halteelement in seinem Stegbereich 102 bricht.

Die Herstellung des Federelements 82 ist in den Figuren 7 und 8 veranschaulicht. Das Federelement ist demnach zunächst durch einen Federbandstreifen 104 gebildet, in den die Ausnehmungen 40 und die Aussparungen 38 geschnitten werden. Weiter wird der spätere Scheitelbereich durch einen Ausschnitt 106 auf den gewünschten Querschnitt gebracht. Schließlich werden noch die beiden Endabschnitte 108 des Federbandstreifens 104 aus der Geraden gebogen. Dabei wird ein Mittelabschnitt 110 schräg gestellt und die Außenkanten der äußersten Endabschnitte 88 liegen wieder parallel zu den Außenkanten des nicht verformten Federbandstreifens 104. Wenn das Federelement eingebaut ist, divergieren die Mittelabschnitte der Federschenkel, während die Endabschnitte 112 der Federschenkel zueinander parallel liegen. Ausgehend von dem in Figur 7 dargestellten Streifen wird dann das in Figur 8 gezeigte Federelement 82 gebogen, wobei der Scheitel 94 entsteht. Die äußersten Endabschnitte 88 werden verschränkt, so daß die Griffflächen 90 gebildet werden. Der Biegevorgang selbst wird jedoch schon abgeschlossen, bevor die Federschenkel 84 und 86 parallel zueinanderliegen. Die Aussparungen 38 liegen noch in dem schrägen Mittelabschnitt 110, während die äußersten Endabschnitte 88 des Federelements 82 parallel zu den nicht verformten Bereichen der Federschenkel liegen. Gegenüber den nicht verformten Bereichen der Federschenkel 84 und 86 sind die äußersten Endabschnitte 88 um ein Maß 114 versetzt, das aus der Schrägstellung des Mittelabschnitts 110 der Federschenkel 84 und 86 resultiert. Wie also insbesondere aus Figur 8 ersichtlich ist, ist der Abstand zwischen den freien Enden 88 der Federschenkel 84, 86 größer als der Abstand zwischen den Schenkeln im Bereich des Scheitels 94 des haarnadelförmigen Federelements 82, was auch durch divergent angeordnete Federschenkel erreicht werden kann. Die gesamte vorige Aussage soll aber stets so verstanden werden, als wenn der Ausschnitt 106 zur Querschnittsverminderung des Federelements nicht vorhanden sei.

Im übrigen soll noch darauf hingewiesen werden, daß die Einzelmerkmale der Ausführungsbeispiele gemäß den Figuren 1 und 2 bzw. 3 und 4 bzw. 5 und 6 nicht nur in den dargestellten Kombinationen verwendet werden können. Es könnte beispielsweise auch die tunnelartige Ausbildung 76 bei der Ausführung gemäß den Figuren 3 und 4 auch bei der Ausführung gemäß den Figuren 1 und 2 Verwendung finden, wobei dann die Handhaben 52 entfallen würden.

## Patentansprüche

1. Vorrichtung zum Wischen von Kraftfahrzeugscheiben, mit einem Gestell (34) zum Halten einer Wischgummileiste (10), die eine auf der Scheibe auflegende Wischlippe (12) und einen von dem Gestell (34) gefaßten Rückenteil (14) aufweist, wobei der Rückenteil (14) in seinen einander gegenüberliegenden Längsseiten mit Längsnuten (18) zur Aufnahme der Schenkel (20, 22 bzw. 64, 66 bzw. 84, 86) eines haarnadelförmigen Federelements (24 bzw. 62 bzw. 82) versehen ist, welche von Haltekrallen (32) des Gestells (34) übergriffen sind, dadurch gekennzeichnet, daß die freien Enden der Schenkel (20, 22 bzw. 64, 66 bzw. 84, 86) durch Griffflächen (50 bzw. 78 bzw. 90) gebildet sind, welche sich quer zu der Ebene erstrecken, in der sich die beiden Federschenkel befinden.

2. Vorrichtung nach Anspruch 1, dadurch gekennzeichnet, daß die Griffflächen durch an den Schenkelenden befestigte Handhaben (52) gebildet sind.

3. Vorrichtung nach Anspruch 1, dadurch gekennzeichnet, daß die Griffflächen durch vorzugsweise außen geriffelte Wände (78) von wenigstens einer Einstecktasche (76) gebildet sind, welche an die Wischgummileiste (60) angeformt ist.

4. Vorrichtung nach Anspruch 1, dadurch gekennzeichnet, daß die Griffflächen durch verschränkte Endabschnitte (88) der Federschenkel (84, 86) gebildet sind.

5. Vorrichtung nach einem der Ansprüche 1 bis 4, dadurch gekennzeichnet, daß die mit dem haarnadelförmigen Federelement (24 bzw. 62 bzw. 82) versehene Wischgummileiste (10 bzw. 60 bzw. 83) in ihrem Mittelabschnitt mit einem entfernbaren, das Federelement übergreifenden Halteelement (98) versehen ist.

## Claims

1. Apparatus for wiping motor vehicle screens, comprising a frame (34) for holding a wiper blade strip (10) which has a wiper lip (12) for engaging the screen and a rear portion (14) gripped by the frame (34) wherein the rear portion (14) is provided with longitudinal grooves (18) in its opposite long sides for the reception of the limbs (20, 22 or 64, 66 or 84, 86) of a hairpin-like spring element (24 or 63 or 82), which are overlapped by support claws (32) of the frame (34), characterised in that, the free ends of the limbs (20, 22 or 64, 66 or 84, 86) are formed by gripping surfaces (50 or 78 or 90) which extend transversely with respect to the plane in which the two spring limbs are located.

2. Apparatus according to claim 1, characterised in that, the gripping surfaces are formed by handles (52) fixed to the ends of the limbs.

3. Apparatus according to claim 1, characterised in that, the gripping surfaces are formed by walls (78) preferably fluted externally, of at least one socket (76), which is moulded with the wiper blade strip (60).

4. Apparatus according to claim 1, characterised in that, the gripping surfaces are formed by displaced end sections (88) of the spring limbs (84, 86).

5. Apparatus according to one of claims 1 to 4, characterised in that, the wiper blade strip (10 or 60 or 83) provided with the hairpin-like spring element (24 or 62 or 82) is provided in its central section with a removable support element (98) overlapping the spring element.

## Revendications

1. Dispositif d'essuie-glace de véhicules automobiles, avec une ossature (34) pour maintenir une barrette de caoutchouc d'essuyage (10), comportant une lèvre d'essuyage (12) s'appliquant sur la glace et une partie arrière (14) saisie par l'ossature (34), cette partie arrière (14) étant alors munie sur ses côtés longitudinaux opposés de gorges longitudinales (18) pour recevoir les branches (20, 22 ou bien 64, 66 ou bien 84, 86) d'un élément élastique (24 ou bien 62 ou bien 82) en forme d'épingle à cheveux, branches par dessus lesquelles viennent en prise des griffes de maintien (32) de l'ossature (34), dispositif caractérisé en ce que les extrémités libres des branches (20, 22 ou bien 64, 66 ou bien 84, 86) sont constituées par des surfaces de prise (50 ou bien 78 ou bien 90) qui s'étendent trasversalement au plan dans lequel se trouvent les deux branches élastiques.

2. Dispositif selon la revendication 1, caractérisé en ce que les surfaces de prise sont constituées par des prises (52) fixées sur les extrémités des branches.

3. Dispositif selon la revendication 1, caractérisé en ce que les surfaces de prise sont constituées par les parois (78), de préférence striées extérieurement, d'au moins une poche d'introduction (76) formée sur la barrette de caoutchouc d'essuyage (60).

4. Dispositif selon la revendication 1, caractérisé en ce que les surfaces de prise sont constituées par les tronçons d'extrémités tordus (88) des branches élastiques (84, 86).

5. Dispositif selon l'une quelconque des revendications 1 à 4, caractérisé en ce que la barrette de caoutchouc d'essuyage (10 ou bien 60 ou bien 83) équipée de l'élément élastique en forme d'épingle à cheveux (24 ou bien 62 ou bien 82) est munie sur son tronçon médian, d'un élément de maintien (98) susceptible d'être enlevé et qui vient en prise sur l'élément élastique.

0 007 017

# FIG.1

# FIG. 2

# FIG.3

1

FIG. 4

FIG. 5

FIG. 6

2

FIG. 7

FIG. 8